# FASCICULE DE BREVET EUROPEEN

(11) **EP 2 600 592 B1**
(45) Date de publication et mention de la délivrance du brevet: **15.03.2017**
(21) Numéro de dépôt: 12194192.6
(22) Date de dépôt: 26.11.2012
(51) Int. Cl.: H04L 29/08, H04L 12/58, G06Q 50/00

(54) **Procédés et dispositifs de communication permettant un échange asynchrone et privé**
Kommunikationsverfahren und -vorrichtungen, die einen asynchronen und privaten Austausch ermöglichen
Communication methods and devices enabling an asynchronous and private exchange

(30) Priorité: 30.11.2011 FR 1160953
(43) Date de publication de la demande: 05.06.2013
(73) Titulaire: Orange, 75015 Paris (FR)
(72) Inventeur: Tronet, Sarah, 22300 LANNION (FR)
(74) Mandataire: Delumeau, François Guy

(56) Documents cités:
- WO-A2-2009/010958
- KR-K2- 100 905 085
- DATABASE EPODOC EUROPEAN PATENT OFFICE, THE HAGUE, NL; 30 juin 2009 (2009-06-30), XP002681845, -& KR 100 905 085 B1 (LOG CORP [KR]) 30 juin 2009 (2009-06-30)

## Description

### Arrière-plan de l'invention

La présente invention se situe dans le domaine des télécommunications et vise plus particulièrement un mécanisme permettant à des individus d'échanger des messages au moyen de leurs terminaux de communications.

Dans l'état actuel de la technique, on connaît notamment des mécanismes permettant à des personnes identifiées (au moyen d'un identifiant de communication tel qu'une adresse email, numéro de téléphone, d'un identifiant social : nom par exemple) de communiquer.

Ces communications entre personnes identifiées peuvent être classées selon leur type synchrone ou asynchrone : à titre d'exemple de communications synchrones, on peut citer la téléphonie sur IP (Internet Protocol), la messagerie instantanée, et à titre d'exemple de communications asynchrones, on peut notamment citer le courrier électronique.

On connaît également des mécanismes permettant à des internautes de communiquer via un serveur Web. A titre d'exemple, on connaît notamment :
- le mécanisme synchrone de conversation en ligne (en anglais "chat") du document KR 100 905 095 dans lequel chaque individu est soit identifié par son nom, son adresse, soit anonyme; et
- les mécanismes collaboratifs, nés avec le Web 2.0 permettant aux internautes d'échanger publiquement de manière asynchrone avec les propriétaires de serveur Web de façon anonyme ou non.

Dans l'état actuel de la technique, il n'existe pas de mécanisme permettant à un individu anonyme de communiquer de façon privée et asynchrone, avec d'autres utilisateurs, via un serveur Web.

Un des buts de l'invention est de remédier aux insuffisances des mécanismes de communications de l'état de la technique.

Le document WO2009/010958 constitue l'état de l'art le plus pruche.

### Objet et résumé de l'invention

L'invention est définie par les revendications indépendantes 1 et 3-13.

Selon un premier aspect, l'invention concerne un procédé de gestion d'échanges de messages entre un premier terminal appartenant à un utilisateur et au moins un deuxième terminal appartenant à au moins un interlocuteur privilégié associé à un contenu publié par un dispositif de fourniture de services.

Ce procédé comporte une étape de fourniture, au premier terminal, d'un identifiant unique, suite à la réception d'une demande du premier terminal pour initier une conversation relative au contenu publié.

Le dispositif de fourniture de services peut par exemple être constitué par un site Web et le contenu publié, une page de ce site Web accessible au public.

Dans ce mode de réalisation, l'invention permet à un utilisateur d'initier une conversation privée et asynchrone sur un sujet en relation avec une page Web publique, l'interlocuteur privilégié de l'utilisateur étant par exemple une personne désignée pour traiter toutes les questions posées en relation avec cette page Web.

Ce procédé peut aussi être mis en oeuvre par un dispositif de messagerie associé à un dispositif de fourniture de service.

Corrélativement, l'invention vise aussi un dispositif de fourniture de services publiant au moins un contenu associé à au moins un interlocuteur privilégié, ce dispositif comportant des moyens de fourniture, à au moins un terminal d'un utilisateur, d'un identifiant unique ; suite à une demande reçue de ce terminal pour initier une conversation associée audit contenu publié.

Dans un mode particulier de réalisation, lorsque l'utilisateur souhaite poster un message dans le cadre de la conversation, il poste ce message en association avec l'identifiant unique associé à cette conversation. Par conséquent, dans ce mode de réalisation, ce procédé comporte une étape de réception d'une requête émise par le premier terminal pour poster un message dans le cadre de la conversation, la requête comportant l'identifiant unique.

Dans un mode particulier de réalisation, lorsque l'interlocuteur privilégié souhaite prendre connaissance des messages postés dans le cadre de la conversation, il envoie un message comportant l'identifiant unique associé à une conversation.

En variante, l'interlocuteur privilégié peut demander à connaître tous les messages postés pour toutes les conversations associées à ou aux contenus publiés auxquels il est associé. Dans ce cas, sa requête de consultation ne comporte pas d'identifiant unique, mais la réponse à cette requête de consultation comporte les messages postés, chacun associé avec l'identifiant unique de la conversation à laquelle il appartient.

Par conséquent, dans un mode de réalisation, de l'invention, le procédé comporte, en réponse à la réception d'une requête de consultation, une étape d'émission d'un signal de consultation comportant au moins un message d'une conversation, éventuellement accompagné de l'identifiant unique de cette conversation.

L'invention vise aussi le mécanisme mis en oeuvre du côté de l'utilisateur.

Par conséquent, selon un deuxième aspect, l'invention concerne un procédé d'échange de messages mis en oeuvre par le terminal d'un utilisateur. Ce procédé comporte :
- une étape d'envoi d'une requête d'échange d'au moins un message dans le cadre d'une conversation, cette requête comportant au moins un identifiant unique fourni au terminal par un dispositif de fourniture de services suite à une demande dudit terminal pour initier cette conversation, la conversation étant associée à un contenu publié par ce dispositif de fourniture de services, le contenu publié étant associé à au moins un interlocuteur privilégié.

Corrélativement, l'invention concerne un terminal comportant :
- des moyens d'envoi d'une requête d'échange d'au moins un message dans le cadre d'une conversation, cette requête comportant au moins un identifiant unique fourni au terminal par un dispositif de fourniture de services suite à une demande du terminal pour initier une conversation, cette conversation étant associée à un contenu publié par le dispositif de fourniture de services, ce contenu publié étant associé à au moins un interlocuteur privilégié.

L'invention vise aussi le mécanisme mis en oeuvre du côté du ou des interlocuteurs privilégiés.

Par conséquent, et selon un troisième aspect, l'invention concerne un procédé d'échange de messages par un terminal d'au moins un interlocuteur dit privilégié associé à un contenu publié par un dispositif de fourniture de services. Ce procédé comporte :
- une étape de transmission entre le terminal et le dispositif de fourniture de services, d'au moins un signal comportant au moins un message et un identifiant unique associé à une conversation à laquelle appartient ce message, cet identifiant unique ayant été fourni au terminal d'un utilisateur par ce dispositif de fourniture de services suite à une demande de ce terminal pour initier la conversation, cette conversation étant associée au contenu publié.

Corrélativement, l'invention vise aussi un terminal comportant :
- des moyens de transmission à un dispositif de fourniture de services d'au moins un signal comportant au moins un message et un identifiant unique associé à une conversation à laquelle appartient ce message, cet identifiant unique ayant été fourni au terminal d'un utilisateur par ce dispositif de fourniture de services suite à une demande de ce terminal pour initier la conversation, cette conversation étant associée au contenu publié.

Ainsi, et d'une façon générale, l'invention permet d'établir une conversation asynchrone et privée entre un utilisateur et un ou plusieurs interlocuteurs privilégiés via un serveur Web.

La conservation est dite asynchrone en ce qu'un message, posté par l'une des parties, n'est reçu de l'autre partie que lorsque celle-ci se connecte au serveur Web. En ce sens, l'invention diffère des mécanismes de messageries instantanées, ou "chat", dans lesquels le destinataire d'un message reçoit le message de l'expéditeur dès que celui-ci est validé.

La conversation selon l'invention est dite anonyme, en ce que l'utilisateur n'envoie ni identifiant de communication :adresse, ni identifiant social : nom, ni même de pseudonyme pour poster ou recevoir les messages de la conversation, seul l'identifiant de la conversation étant nécessaire.

La conversation selon l'invention est dite privée, en ce que seul l'utilisateur a accès à sa conversation en dehors des interlocuteurs privilégiés.

Dans un mode préféré de réalisation, les requêtes et messages échangés entre le terminal de l'utilisateur et le serveur Web d'une part et entre le terminal de l'interlocuteur privilégié et le serveur Web d'autre part sont échangés selon un protocole sécurisé de type HTTPS.

En variante, les requêtes et messages échangés entre le premier terminal de l'utilisateur du serveur Web sont conformes au protocole http, les messages échangés entre le deuxième terminal de l'interlocuteur privilégié et le serveur Web étant échangés selon un protocole sécurisé de type HTTPS.

Dans un mode particulier de réalisation, les différentes étapes des procédés selon, l'invention sont déterminées par des instructions de programmes d'ordinateurs.

En conséquence, l'invention vise aussi un programme d'ordinateur sur un support d'informations, ce programme étant susceptible d'être mis en oeuvre par un ordinateur, ce programme comportant des instructions adaptées à la mise en oeuvre des étapes d'un procédé tel que mentionné ci-dessus.

Ce programme peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

L'invention vise aussi un support d'informations lisible par un ordinateur, et comportant des instructions d'un programme d'ordinateur tel que mentionné ci-dessus.

Le support d'informations peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple une disquette (floppy disc) ou un disque dur.

D'autre part, le support d'informations peut être un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet.

Alternativement, le support d'informations peut être un circuit intégré dans lequel le programme est incorporé, le circuit étant adapté pour exécuter ou pour être utilisé dans l'exécution du procédé en question.

### Brève description des dessins

D'autres caractéristiques et avantages de la présente invention ressortiront de la description faite ci-dessous, en référence à l'unique figure qui en illustre un exemple de réalisation dépourvue de tout caractère limitatif.

### Description détaillée de l'invention

Par « identifiant unique » est entendu un identifiant fourni de manière bijective à un seul utilisateur pouvant l'utiliser sur un ou plusieurs de ces terminaux ou à un terminal d'un utilisateur.

L'invention permet qu'un message transmis ait un expéditeur et un destinataire tout comme un email classique ou un message vocal classique permettant une conversation asynchrone privée même si l'un et/ou l'autre de l'expéditeur et/ou du destinataire souhaite ne pas transmettre son adresse de messagerie ou son numéro de téléphone.

Par « interlocuteur privilégié » est entendu une personne associée à un contenu publié par un dispositif de fourniture de contenu, tel que l'auteur d'une page Web publiée par un serveur Web ou un employé d'une entreprise dont la page Web est publiée par un serveur Web et ayant accès, de façon privée, aux messages échangés avec les utilisateurs dans le cadre de conversations en relation avec ce contenu.. Il peut ainsi être envisagé qu'une page Web comportant plusieurs contenus : articles, images, etc. soit accessible par plusieurs interlocuteurs privilégiés tels qu'un ou plusieurs auteurs de l'article ou le responsable du service/produit décrit par l'article, la personne photographiée, le chef du produit photographié, un interlocuteur du service de communication responsable de la publicité, etc.

Par « contenu publié » est entendu tout contenu multimédia : texte, photo, vidéo, audio, et même applications tels que des jeux en ligne, des outils informatiques, etc.

L'invention peut être mise en oeuvre comme décrit ci-après uniquement par le dispositif de fourniture de service en charge de la publication du contenu ou par un dispositif de messagerie sollicité par ledit dispositif de fourniture de service pour tous les contenus publiés par ledit dispositif de fourniture de services ou pour un contenu publié auquel le dispositif de messagerie est associé.

Par « message » est entendu tout type d'échange : messages textuels tel qu'email, SMS, etc., messages vocaux, messages multimédia tels que messages Visio, MMS, etc.

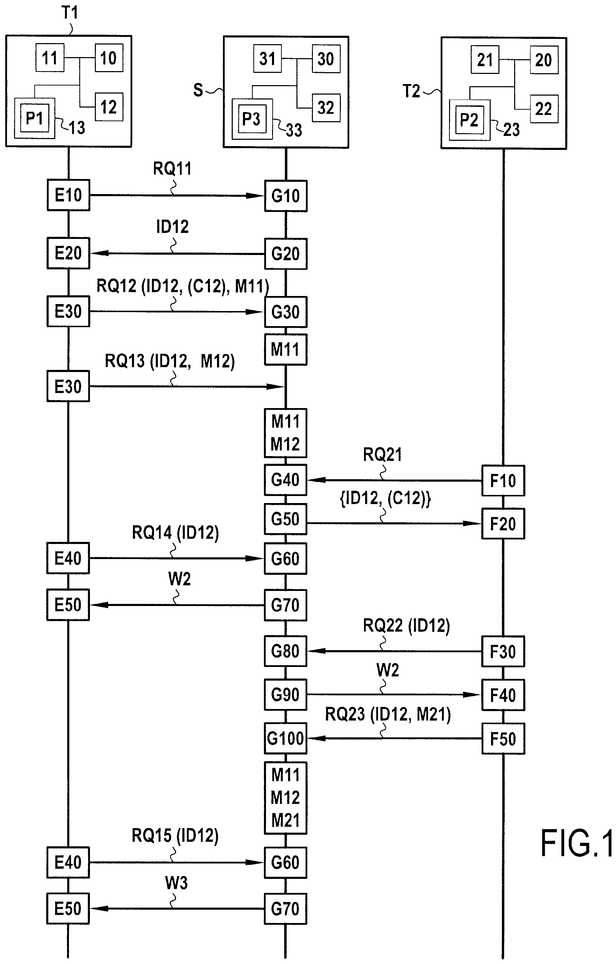

Sur la figure 1, on a représenté le terminal T1 d'un utilisateur, un serveur Web S et le terminal T2 d'un interlocuteur privilégié au sens de l'invention, à savoir dans cet exemple le propriétaire ou l'administrateur du serveur internet S.

Dans l'exemple de réalisation décrit ici, les terminaux T1 et T2 et le serveur Web S ont une architecture matérielle d'un ordinateur conventionnel.

Ils comportent respectivement :
- un processeur 10, 20, 30 ;
- une mémoire vive de type RAM 11, 21,31 ;
- des moyens de télécommunications 12, 22,32 ; et
- une mémoire morte de type ROM 13, 23, 33.

Les mémoires mortes 13, 23 et 33 constituent des supports d'enregistrement au sens de l'invention, ceux-ci étant lisibles par le terminal ordinateur T1, T2 et le serveur web S dans lequel ils sont incorporés, ces supports comportant un programme d'ordinateur P1, respectivement P2 et P3 comprenant des instructions pour l'exécution des étapes des procédés mis en oeuvre par chacun de ces terminaux.

Plus particulièrement, le programme P1 comporte des instructions pour l'exécution des étapes EXX, le programme P2 des instructions pour l'exécution des étapes FXX et le programme P3 des instructions pour l'exécution des étapes GXX de la figure 1.

On suppose, qu'au cours d'une étape E10, l'utilisateur du terminal T1 souhaite initier une conversation avec le propriétaire du serveur internet S, via ce serveur internet S.

A cet effet, il émet une requête RQ11 telle qu'une demande d'initialisation d'une conversation. Cette requête est reçue par le serveur Web S au cours d'une étape G10.

Au cours d'une étape G20, le serveur Web S envoie au terminal T1 un identifiant ID12 unique au sein de ce serveur internet. Cet identifiant est reçu par le terminal T1 au cours d'une étape E20.

Conformément à l'invention, cet identifiant ID12 sera utilisé par l'utilisateur du terminal T1 pour poster et recevoir des messages de façon asynchrone et privée dans le cadre de cette conversation.

Par exemple, l'utilisateur du terminal T1 clique sur un bouton affiché sur son terminal T1 affichant une page Internet d'un serveur Internet S. Cela déclenche l'émission d'une requête RQ11 vers le serveur Internet S et l'ouverture soit d'une page Internet soit d'une fenêtre de saisie d'un message ou d'une question. La page ou la fenêtre de saisie peut être fournie par le serveur Internet S conjointement avec la fourniture d'un identifiant unique de conversation ID12. Lorsque l'utilisateur du terminal T1 envoie son message notamment en cliquant sur un bouton de validation ou d'envoi du message ou de la question après sa saisie, le message est envoyé par le terminal T1 de l'utilisateur avec l'identifiant unique ID12 qu'il vient de recevoir.

On suppose, qu'au cours d'une étape E30, l'utilisateur du terminal T1 émet une requête RQ12 pour poster un premier message M11 dans le cadre de cette conversation. Cette requête est reçue par le serveur Web S au cours d'une étape G30. Conformément à l'invention, cette requête RQ12 comporte le message M11, l'identifiant ID12 de la conversation mais ne comporte aucun identifiant du terminal T1.

Dans l'exemple de réalisation décrit ici, la requête RQ12 comporte en outre un objet général C12 de la conversation, mais ceci est optionnel.

Le message M11 est stocké par le serveur Web S. On suppose, que l'utilisateur du terminal T1 poste un deuxième message M12, au cours d'une nouvelle occurrence de l'étape E30 (reçu à l'étape G30), par l'envoi d'une requête RQ13 à destination du serveur internet S.

Comme représenté sur la figure 1, le serveur Web S mémorise alors les messages M11 et M12.

Nous supposerons, qu'au cours d'une étape F10, l'administrateur du serveur S, utilise son terminal T2 pour émettre une requête RQ21 à destination du serveur S pour obtenir la liste des sujets de conversation en cours auquel il peut participer. Cette requête est reçue par le serveur Web S au cours d'une étape G40.

Le serveur Web S envoie, au cours d'une étape G50 l'identifiant ID12 de la conversation initiée par l'utilisateur du terminal T1, et lorsque celui-ci existe, le sujet C12 de cette conversation. Ces données sont reçues par le terminal T2 au cours d'une étape F20.

Nous supposerons que l'utilisateur du terminal T1 envoie, au cours d'une étape E40, une requête RQ14 au serveur hébergeant le serveur internet S, pour prendre connaissance des messages postés dans le cadre de la conversation C12. Cette requête est reçue par le serveur Web S au cours d'une étape G60.

Conformément à l'invention, cette requête comporte l'identifiant ID12 de la conversation mais ne comporte aucun identifiant du terminal T1.

Au cours d'une étape G70, le serveur Web S envoie au terminal T1 une page Web P2, celle-ci comportant les messages M11 et M12 postés par l'utilisateur du terminal T1. Cette page Web est reçue par le terminal T1 au cours d'une étape E50.

Nous supposerons qu'au cours d'une étape F30, l'utilisateur du terminal T2, à savoir l'interlocuteur privilégié, envoie une requête RQ22 au serveur Web S pour prendre connaissance des messages de conversation. Cette requête RQ22 comporte l'identifiant ID12. Elle est reçue par le serveur Web S au cours d'une étape G80.

Au cours d'une étape G90, le serveur Web envoie une page web W2 contenant les messages M11 et M12 de la conversation C12 au terminal T2. Cette page Web est reçue par le terminal T2 au cours d'une étape F40.

Puis, nous supposerons qu'au cours d'une étape F50, l'interlocuteur privilégié envoie au serveur S, une requête RQ23 pour ajouter un message M21 à la conversation C12. Cette requête est reçue par le serveur Web au cours d'une étape G100.

Les messages M11 et M12 postés par l'utilisateur du terminal T1 et le message M21 posté par l'utilisateur du terminal T2 et associés à la conversation C12 sont maintenant mémorisés par le serveur web.

De manière alternative, au cours de l'étape F10, l'administrateur du serveur S, utilise son terminal T2 pour émettre une requête RQ21 à destination du serveur S pour obtenir l'ensemble des messages postés sur des sujets de conversation en cours auquel il peut participer.

Il reçoit, au cours d'une étape F40 les messages des conversations initiées notamment les messages M11 et M12 de l'utilisateur du terminal T1.

Au cours d'une nouvelle occurrence de l'étape E40 (et de l'étape G60), l'utilisateur du terminal T1 envoie une requête RQ15 pour vérifier si des messages ont été postés dans le cadre de la conversation et reçoit, au cours d'une étape E50, les messages M11, M12 et M21 de la conversation C12 pouvant être présentés dans une page Web W3.

L'invention permet ainsi d'établir une communication privée et asynchrone entre l'utilisateur du terminal T1 et l'interlocuteur privilégié, utilisateur du terminal T2, via le serveur Internet S.

## Revendications

1. Procédé de gestion d'échanges asynchrones de messages entre un premier terminal (T1) appartenant à un utilisateur et au moins un deuxième terminal (T2) appartenant à au moins un interlocuteur privilégié associé à un contenu publié par un serveur Web (S), ce procédé comportant une étape (G20) de fourniture, audit premier terminal (T1), d'un identifiant (ID12), suite à la réception (G10) d'une demande du premier terminal pour initier une conversation asynchrone et anonyme relative audit contenu publié, ledit procédé étant tel que :
- ledit identifiant (ID12) est unique et associé à ladite conversation, ledit identifiant unique (ID12) étant associé aux messages postés par ledit utilisateur dans le cadre de ladite conversation et compris dans les messages envoyés par ledit interlocuteur privilégié pour prendre connaissance des messages postés dans le cadre de ladite conversation ; et en ce que :
- la conversation étant asynchrone en ce qu'un message posté par l'un desdits terminaux (T1, T2) n'est reçu de l'autre terminal (T1, T2) que lorsque celui-ci se connecte audit serveur Web (S).

2. Procédé selon la revendication précédente, **caractérisé en ce qu'**il comporte, en réponse à la réception (G80) d'une requête de consultation, une étape (G90) d'émission (G90) d'un signal de consultation comportant au moins un message de ladite conversation.

3. Procédé d'échange asynchrone de messages (M1i, M2i) mis en oeuvre par un terminal (T1) d'un utilisateur pour échanger des messages avec au moins un deuxième terminal (T2) appartenant à au moins un interlocuteur privilégié associé à un contenu publié par un serveur Web (S), ce procédé comportant :
- une étape (E30, E40) d'envoi d'une requête (RQ12, RQ13, RQ14) d'échange d'au moins un message dans le cadre d'une conversation asynchrone et anonyme, cette requête comportant au moins un identifiant (ID12) reçu par ledit terminal (T1) dudit serveur Web (S) suite à une demande dudit terminal (T1) pour initier ladite conversation asynchrone et anonyme, ladite conversation étant associée à un contenu publié par ledit serveur Web (S), ledit contenu publié étant associé à au moins un interlocuteur privilégié, ledit procédé étant tel que :
- ledit identifiant (ID12) est unique et associé à ladite conversation, ledit identifiant unique (ID12) étant associé aux messages postés par ledit utilisateur dans le cadre de ladite conversation et compris dans les messages envoyés par ledit interlocuteur privilégié pour prendre connaissance des messages postés dans le cadre de ladite conversation, et en ce que :
- la conversation étant asynchrone en ce qu'un message posté par l'un desdits terminaux (T1, T2) n'est reçu de l'autre terminal (T1, T2) que lorsque celui-ci se connecte audit serveur Web (S).

4. Procédé d'échange asynchrone de messages mis en oeuvre par un terminal (T2) d'au moins un interlocuteur dit privilégié associé à un contenu publié par un serveur Web (S), ce procédé comportant :
- une étape (F50) de transmission audit dispositif de fourniture de services d'au moins un signal comportant au moins un message (M21) et un identifiant (ID12) associé à une conversation associée audit contenu publié, asynchrone et anonyme à laquelle appartient ledit message, ledit identifiant (ID12) ayant été reçu (F20) par ledit terminal (T2) en provenance dudit serveur Web (S), ledit procédé étant tel que :
- ledit identifiant (ID12) est unique et associé à ladite conversation, ledit identifiant unique (ID12) étant associé aux messages postés par ledit utilisateur dans le cadre de ladite conversation et compris dans les messages envoyés par ledit interlocuteur privilégié pour prendre connaissance des messages postés dans le cadre de ladite conversation et en ce que :
- la conversation étant asynchrone en ce qu'un message posté par l'un desdits terminaux (T1, T2) n'est reçu de l'autre terminal (T1, T2) que lorsque celui-ci se connecte audit serveur Web (S).

5. Serveur Web (S) apte à publier au moins un contenu associé à au moins un interlocuteur privilégié, ledit serveur Web (S) comportant :
- des moyens de réception, en provenance d'au moins un terminal (T1) d'un utilisateur, d'une demande pour initier une conversation asynchrone et anonyme associée audit contenu publié ;
- des moyens de fourniture, audit au moins un terminal (T1), d'un identifiant unique (ID12) suite à la réception de ladite demande, ladite conversation comportant un échange de messages entre ledit au moins un premier terminal (T1) et au moins un deuxième terminal (T2) appartenant audit interlocuteur privilégié, ledit serveur Web (S) étant tel que :
- ledit identifiant est unique et associé à ladite conversation, ledit identifiant unique (ID12) étant associé aux messages postés par ledit utilisateur dans le cadre de ladite conversation et compris dans les messages envoyés par ledit interlocuteur privilégié pour prendre connaissance des messages postés dans le cadre de ladite conversation et en ce que :
ladite conversation étant asynchrone en ce qu'un message posté par l'un desdits terminaux (T1, T2) n'est reçu de l'autre terminal (T1, T2) que lorsque celui-ci se connecte audit serveur Web (S).

6. Terminal (T1) comportant :
- des moyens d'envoi, à un serveur Web, d'une demande (E10) pour initier une conversation asynchrone et anonyme, ladite conversation étant associée à un contenu publié par ledit serveur Web (S) ;
- des moyens de réception d'un identifiant (ID12) en provenance d'un serveur Web (S) suite à l'envoi de ladite demande ;
- des moyens (12) d'envoi d'une requête d'échange d'au moins un message dans le cadre de ladite conversation asynchrone et anonyme, cette requête comportant au moins ledit identifiant, ladite conversation comportant un échange de messages entre ledit terminal (T1) et au moins un deuxième terminal (T2) appartenant à un interlocuteur privilégié associé audit contenu publié par ledit serveur Web (S), ledit terminal étant tel que :
- ledit identifiant est unique et associé à ladite conversation, ledit identifiant unique (ID12) étant associé aux messages postés par ledit utilisateur dans le cadre de ladite conversation et compris dans les messages envoyés par ledit interlocuteur privilégié pour prendre connaissance des messages postés dans le cadre de ladite conversation ; et en ce que :
- ladite conversation étant asynchrone en ce qu'un message posté par l'un desdits terminaux (T1, T2) n'est reçu de l'autre terminal (T1, T2) que lorsque celui-ci se connecte audit serveur Web (S).

7. Terminal (T2) comportant :
- des moyens de réception d'un identifiant unique (ID12) en provenance d'un serveur Web (S), ledit identifiant unique étant associé à une conversation asynchrone, anonyme et privée initiée par un terminal (T1), ladite conversation étant associée à un contenu publié par ledit serveur Web (S) ;
- des moyens (22) de transmission audit serveur Web (S) d'au moins un signal comportant au moins un message (M21) et ledit identifiant unique (ID12), ledit terminal étant tel que :
- ledit identifiant est unique et associé à ladite conversation, ledit identifiant unique (ID12) étant associé aux messages postés par ledit utilisateur dans le cadre de ladite conversation et compris dans les messages envoyés par ledit interlocuteur privilégié pour prendre connaissance des messages postés dans le cadre de ladite conversation ; et en ce que :
- ladite conversation est asynchrone en ce qu'un message posté par l'un desdits terminaux (T1, T2) n'est reçu de l'autre terminal (T1, T2) que lorsque celui-ci se connecte audit serveur Web (S).

8. Programme d'ordinateur (P3) comportant des instructions pour l'exécution des étapes d'un procédé selon l'une quelconques des revendications 1 à 2 lorsque ledit programme est exécuté par un ordinateur (S).

9. Support d'enregistrement (33) lisible par un ordinateur sur lequel est enregistré un programme d'ordinateur comprenant des instructions pour l'exécution des étapes du procédé selon l'une quelconques des revendications 1 à 2.

10. Programme d'ordinateur (P1) comportant des instructions pour l'exécution des étapes d'un procédé selon la revendication 3 lorsque ledit programme est exécuté par un ordinateur.

11. Support d'enregistrement (13) lisible par un ordinateur sur lequel est enregistré un programme d'ordinateur (P1) comprenant des instructions pour l'exécution des étapes du procédé selon la revendication 3.

12. Programme d'ordinateur (P2) comportant des instructions pour l'exécution des étapes d'un procédé selon la revendication 4 lorsque ledit programme est exécuté par un ordinateur.

13. Support d'enregistrement (13) lisible par un ordinateur sur lequel est enregistré un programme d'ordinateur (P1) comprenant des instructions pour l'exécution des étapes du procédé selon la revendication 4.

## Patentansprüche

1. Steuerverfahren für den asynchronen Austausch von Nachrichten zwischen einem ersten Endgerät (T1), das zu einem Anwender gehört, und wenigstens einem zweiten Endgerät (T2), das zu wenigstens einem privilegierten Teilnehmer gehört, dem ein durch einen Web-Server (S) veröffentlichter Inhalt zugeordnet ist, wobei dieses Verfahren einen Schritt (G20) des Lieferns an das erste Endgerät (T1) einer Kennung (ID12) nach dem Empfang (G10) einer Aufforderung des ersten Endgeräts, eine asynchrone und anonyme Konversation in Bezug auf den veröffentlichten Inhalt zu beginnen, umfasst, wobei das Verfahren derart ist, dass:
- die Kennung (ID12) eindeutig ist und der Konversation zugeordnet ist, wobei die eindeutige Kennung (ID12) Nachrichten zugeordnet ist, die von dem Anwender im Rahmen der Konversation gepostet werden und in den von dem privilegierten Teilnehmer geschickten Nachrichten enthalten ist, um von den Nachrichten Kenntnis zu nehmen, die im Rahmen der Konversation gepostet werden;
und dass:
- eine Nachricht, die von einem der Endgeräte (T1, T2) gepostet wird, da die Konversation asynchron ist, von dem anderen Endgerät (T1, T2) nur empfangen wird, wenn dieses sich mit dem Web-Server (S) verbindet.

2. Verfahren nach dem vorhergehenden Ansprüche, **dadurch gekennzeichnet, dass** es in Reaktion auf den Empfang (G80) einer Konsultationsanforderung einen Schritt (G90) des Sendens (G90) eines Konsultationssignals, das wenigstens eine Nachricht der Konversation enthält, umfasst.

3. Verfahren für den asynchronen Austausch von Nachrichten (M1i, M2i), das durch ein Endgerät (T1) eines Anwenders ausgeführt wird, um Nachrichten mit wenigstens einem zweiten Endgerät (T2) auszutauschen, das zu wenigstens einem privilegierten Teilnehmer gehört, dem ein durch einen Web-Server (S) veröffentlichter Inhalt zugeordnet ist, wobei dieses Verfahren Folgendes umfasst:
- einen Schritt (E30, E40) des Schickens einer Anforderung (RQ12, RQ13, RQ14) zum Austauschen wenigstens einer Nachricht im Rahmen einer asynchronen und anonymen Konversation, wobei diese Anforderung wenigstens eine Kennung (ID12) enthält, die durch das Endgerät (T1) von dem Web-Server (S) infolge einer Aufforderung des Endgeräts (T1), die asynchrone und anonyme Konversation zu beginnen, empfangen wird, wobei die Konversation einem durch den Web-Server (S) veröffentlichten Inhalt zugeordnet ist, wobei der veröffentlichte Inhalt wenigstens einem privilegierten Teilnehmer zugeordnet ist, wobei das Verfahren derart ist, dass:
- die Kennung (ID12) eindeutig ist und der Konversation zugeordnet ist, wobei die eindeutige Kennung (ID12) den Nachrichten zugeordnet ist, die von dem Anwender im Rahmen der Konversation gepostet werden, und in den von dem privilegierten Teilnehmer geschickten Nachrichten enthalten ist, um von Nachrichten Kenntnis zu nehmen, die im Rahmen der Konversation gepostet werden, und dass:
- eine von einem der Endgeräte (T1, T2) gepostete Nachricht, da die Konversation asynchron ist, von dem anderen Endgerät (T1, T2) nur empfangen wird, wenn sich dieses mit dem Web-Server (S) verbindet.

4. Verfahren für den asynchronen Austausch von Nachrichten, das durch ein Endgerät (T2) wenigstens eines sogenannten privilegierten Teilnehmers ausgeführt wird, dem ein von einem Web-Server (S) veröffentlichter Inhalt zugeordnet ist, wobei dieses Verfahren Folgendes umfasst:
- einen Schritt (F50) des Übertragens an die Vorrichtung zum Liefern von Diensten wenigstens eines Signals, das wenigstens eine Nachricht (M21) und eine Kennung (ID12), die einer dem veröffentlichten Inhalt zugeordneten Konversation zugeordnet ist, die asynchron und anonym ist und zu der die Nachricht gehört, enthält, wobei die Kennung (ID12) durch das Endgerät (T2) von dem Web-Server (S) empfangen (F20) wird, wobei das Verfahren derart ist, dass:
- die Kennung (ID12) eindeutig ist und der Konversation zugeordnet ist, wobei die eindeutige Kennung (ID12) den Nachrichten zugeordnet ist, die von dem Anwender im Rahmen der Konversation gepostet werden, und in den von dem privilegierten Teilnehmer geschickten Nachrichten enthalten ist, um von Nachrichten Kenntnis zu nehmen, die im Rahmen der Konversation gepostet werden, und dass:
- eine von einem der Endgeräte (T1, T2) gepostete Nachricht, da die Konversation asynchron ist, von dem anderen Endgerät (T1, T2) nur empfangen wird, wenn sich dieses mit dem Web-Server (S) verbindet.

5. Web-Server (S), der wenigstens einen Inhalt veröffentlichen kann, der wenigstens einem privilegierten Teilnehmer zugeordnet ist, wobei der Web-Server (S) Folgendes umfasst:
- Mittel, um von wenigstens einem Endgerät (T1) eines Anwenders eine Aufforderung zum Beginnen einer asynchronen und anonymen Konversation, die dem veröffentlichten Inhalt zugeordnet ist, zu empfangen;
- Mittel, um an das wenigstens eine Endgerät (T1) infolge des Empfangs der Aufforderung eine eindeutige Kennung (ID12) zu liefern, wobei die Konversation einen Austausch von Nachrichten zwischen dem wenigstens einen ersten Endgerät (T1) und wenigstens einem zweiten Endgerät (T2), das zu dem privilegierten Teilnehmer gehört, umfasst, wobei der Web-Server (S) derart ist, dass:
- die Kennung eindeutig ist und der Konversation zugeordnet ist, wobei die eindeutige Kennung (ID12) den Nachrichten zugeordnet ist, die von dem Anwender im Rahmen der Konversation gepostet werden, und in den von dem privilegierten Teilnehmer geschickten Nachrichten enthalten ist, um von Nachrichten Kenntnis zu nehmen, die im Rahmen der Konversation gepostet werden, und dass:
eine von einem der Endgeräte (T1, T2) gepostete Nachricht, da die Konversation asynchron ist, von dem anderen Endgerät (T1, T2) nur empfangen wird, wenn sich dieses mit dem Web-Server (S) verbindet.

6. Endgerät (T1), das Folgendes umfasst:
- Mittel, um an einen Web-Server eine Aufforderung (E10) zum Beginnen einer asynchronen und anonymen Konversation zu schicken, wobei die Konversation einem durch den Web-Server (S) veröffentlichten Inhalt zugeordnet ist;
- Mittel zum Empfangen einer Kennung (ID12) von einem Web-Server (S) infolge des Schickens der Aufforderung;
- Mittel (12) zum Schicken einer Anforderung zum Austauschen wenigstens einer Nachricht im Rahmen der asynchronen und anonymen Konversation, wobei diese Anforderung wenigstens die Kennung enthält, wobei die Konversation einen Austausch von Nachrichten zwischen dem Endgerät (T1) und wenigstens einem zweiten Endgerät (T2), das zu einem privilegierten Teilnehmer gehört, dem der durch den Web-Server (S) veröffentlichte Inhalt zugeordnet ist, umfasst, wobei das Endgerät derart ist, dass:
- die Kennung eindeutig ist und der Konversation zugeordnet ist, wobei die eindeutige Kennung (ID12) den Nachrichten zugeordnet ist, die durch den Anwender im Rahmen der Konversation gepostet werden, und in den durch den privilegierten Teilnehmer geschickten Nachrichten enthalten ist, um von Nachrichten Kenntnis zu nehmen, die im Rahmen der Konversation gepostet werden; und dass:
- eine von einem der Endgeräte (T1, T2) gepostete Nachricht, da die Konversation asynchron ist, von dem anderen Endgerät (T1, T2) nur empfangen wird, wenn sich dieses mit dem Web-Server (S) verbindet.

7. Endgerät (T2), das Folgendes umfasst:
- Mittel zum Empfangen einer eindeutigen Kennung (ID12) von einem Web-Server (S), wobei die eindeutige Kennung einer asynchronen, anonymen und privaten Konversation zugeordnet ist, die durch ein Endgerät (T1) begonnen wird, wobei der Konversation ein durch den Web-Server (S) veröffentlichter Inhalt zugeordnet ist;
- Mittel (22) zum Übertragen an den Web-Server (S) wenigstens eines Signals, das wenigstens eine Nachricht (M21) und die eindeutige Kennung (ID12) enthält, wobei das Endgerät derart ist, dass:
- die Kennung eindeutig ist und der Konversation zugeordnet ist, wobei die eindeutige Kennung (ID12) den Nachrichten zugeordnet ist, die durch den Anwender im Rahmen der Konversation gepostet werden, und in den durch den privilegierten Teilnehmer geschickten Nachrichten enthalten ist, um von Nachrichten Kenntnis zu nehmen, die im Rahmen der Konversation gepostet werden; und dass:
- die Konversation asynchron ist, so dass eine von einem der Endgeräte (T1, T2) gepostete Nachricht von dem anderen Endgerät (T1, T2) nur empfangen wird, wenn sich dieses mit dem Web-Server (S) verbindet.

8. Computerprogramm (P3), das Befehle für die Abarbeitung der Schritte eines Verfahrens nach einem der Ansprüche 1 bis 2, wenn das Programm durch einen Computer (S) ausgeführt wird, enthält.

9. Aufzeichnungsträger (33), der durch einen Computer lesbar ist und auf dem ein Computerprogramm aufgezeichnet ist, das Befehle für die Abarbeitung der Schritte des Verfahrens nach einem der Ansprüche 1 bis 2 enthält.

10. Computerprogramm (P1), das Befehle für die Abarbeitung der Schritte eines Verfahrens nach Anspruch 3, wenn dieses Programm durch einen Computer ausgeführt wird, enthält.

11. Aufzeichnungsträger (13), der durch einen Computer lesbar ist und auf dem ein Computerprogramm (P1) aufgezeichnet ist, das Befehle für die Abarbeitung der Schritte des Verfahrens nach Anspruch 3 enthält.

12. Computerprogramm (P2), das Befehle für die Abarbeitung der Schritte eines Verfahrens nach Anspruch 4, wenn das Programm durch einen Computer ausgeführt wird, enthält.

13. Aufzeichnungsträger (13), der durch einen Computer lesbar ist und auf dem ein Computerprogramm (P1) aufgezeichnet ist, das Befehle für die Abarbeitung der Schritte des Verfahrens nach Anspruch 4 enthält.

## Claims

1. Method for managing asynchronous exchanges of messages between a first terminal (T1) belonging to a user and at least one second terminal (T2) belonging to at least one preferred contact associated with a content published by a web server (S), this method comprising a step (G20) of supplying, to said first terminal (T1), an identifier (ID12), following the reception (G10) of a request from the first terminal to initiate an asynchronous and anonymous conversation relating to said published content, said method being such that:
- said identifier (ID12) is unique and associated with said conversation, said unique identifier (ID12) being associated with the messages posted by said user in the context of said conversation and included in the messages sent by said preferred contact to be aware of the messages posted in the context of said conversation; and in that:
- the conversation being asynchronous in that a message posted by one of said terminals (T1, T2) is received from the other terminal (T1, T2) only when the latter connects to said web server (S).

2. Method according to the preceding claim, **characterized in that** it comprises, in response to the reception (G80) of a consultation request, a step (G90) of transmission (G90) of a consultation signal comprising at least one message of said conversation.

3. Method for the asynchronous exchange of messages (M1i, M2i) implemented by a terminal (T1) of a user to exchange messages with at least one second terminal (T2) belonging to at least one preferred contact associated with a content published by a web server (S), this method comprising:
- a step (E30, E40) of sending a request (RQ12, RQ13, RQ14) to exchange at least one message in the context of an asynchronous and anonymous conversation, this request comprising at least one identifier (ID12) received by said terminal (T1) from said web server (S) following a request from said terminal (T1) to initiate said asynchronous and anonymous conversation, said conversation being associated with a content published by said web server (S), said published content being associated with at least one preferred contact, said method being such that:
- said identifier (ID12) is unique and associated with said conversation, said unique identifier (ID12) being associated with the messages posted by said user in the context of said conversation and included in the messages sent by said preferred contact to be aware of the messages posted in the context of said conversation, and in that:
- the conversation being asynchronous in that a message posted by one of said terminals (T1, T2) is received from the other terminal (T1, T2) only when the latter connects to said web server (S).

4. Method for the asynchronous exchange of messages implemented by a terminal (T2) of at least one so-called preferred contact associated with a content published by a web server (S), this method comprising:
- a step (F50) of transmission to said device supplying services of at least one signal comprising at least one message (M21) and an identifier (ID12) associated with a conversation associated with said published, asynchronous and anonymous content to which said message belongs, said identifier (ID12) having been received (F20) by said terminal (T2) from said web server (S), said method being such that:
- said identifier (ID12) is unique and associated with said conversation, said unique identifier (ID12) being associated with the messages posted by said user in the context of said conversation and included in the messages sent by said preferred contact to be aware of the messages posted in the context of said conversation and in that:
- the conversation being asynchronous in that a message posted by one of said terminals (T1, T2) is received from the other terminal (T1, T2) only when the latter connects to said web server (S).

5. Web server (S) suitable for publishing at least one content associated with at least one preferred contact, said web server (S) comprising:
- means for receiving, from at least one terminal (T1) of a user, a request to initiate an asynchronous and anonymous conversation associated with said published content;
- means for supplying, to said at least one terminal (T1), a unique identifier (ID12) following the reception of said request, said conversation comprising an exchange of messages between said at least one first terminal (T1) and at least one second terminal (T2) belonging to said preferred contact, said web server (S) being such that:
- said identifier is unique and associated with said conversation, said unique identifier (ID12) being associated with the messages posted by said user in the context of said conversation and included in the messages sent by said preferred contact to be aware of the messages posted in the context of said conversation and in that:
- said conversation being asynchronous in that a message posted by one of said terminals (T1, T2) is received from the other terminal (T1, T2) only when the latter connects to said web server (S).

6. Terminal (T2.) comprising:
- means for sending, to a web server, a request (E10) to initiate an asynchronous and anonymous conversation, said conversation being associated with a content published by said web server (S);
- means for receiving an identifier (ID12) from a web server (S) following the sending of said request;
- means (12) for sending a request to exchange at least one message in the context of said asynchronous and anonymous conversation, this request comprising at least said identifier, said conversation comprising an exchange of messages between said terminal (T1) and at least one second terminal (T2) belonging to a preferred contact associated with said content published by said web server (S), said terminal being such that:
- said identifier is unique and associated with said conversation, said unique identifier (ID12) being associated with the messages posted by said user in the context of said conversation and included in the messages sent by said preferred contact to be aware of the messages posted in the context of said conversation;
and in that:
- said conversation being asynchronous in that a message posted by one of said terminals (T1, T2) is received from the other terminal (T1, T2) only when the latter connects to said web server (S).

7. Terminal (T2) comprising:
- means for receiving a unique identifier (ID12) from a web server (S), said unique identifier being associated with an asynchronous, anonymous and private conversation initiated by a terminal (T1), said conversation being associated with a content published by said web server (S);
- means (22) for transmitting to said web server (S) at least one signal comprising at least one message (M21) and said unique identifier (ID12), said terminal being such that:
- said identifier is unique and associated with said conversation, said unique identifier (ID12) being associated with the messages posted by said user in the context of said conversation and included in the messages sent by said preferred contact to be aware of the messages posted in the context of said conversation; and in that:
- said conversation is asynchronous in that a message posted by one of said terminals (T1, T2) is received from the other terminal (T1, T2) only when the latter connects to said web server (S).

8. Computer programme (P3) comprising instructions for executing the steps of a method according to either one of Claims 1 or 2 when said programme is run by a computer (S).

9. Computer-readable storage medium (33) on which is stored a computer programme comprising instructions for executing the steps of the method according to either one of Claims 1 or 2.

10. Computer programme (P1) comprising instructions for executing the steps of a method according to Claim 3 when said programme is run by a computer.

11. Computer-readable storage medium (13) on which is stored a computer programme (P1) comprising instructions for executing the steps of the method according to Claim 3.

12. Computer programme (P2) comprising instructions for executing the steps of a method according to Claim 4 when said programme is run by a computer.

13. Computer-readable storage medium (13) on which is stored a computer programme (P1) comprising instructions for executing the steps of the method according to Claim 4.
